(19) **Europäisches Patentamt**
**European Patent Office**
**Office européen des brevets**

(11) **EP 1 081 564 B1**

(12) **EUROPÄISCHE PATENTSCHRIFT**

(45) Veröffentlichungstag und Bekanntmachung des Hinweises auf die Patenterteilung:
**05.09.2007 Patentblatt 2007/36**

(51) Int Cl.:
*G04G 7/00* (2006.01)    *G04G 3/02* (2006.01)
*G06F 1/14* (2006.01)

(21) Anmeldenummer: **00113740.5**

(22) Anmeldetag: **29.06.2000**

(54) **Verfahren zur Herstellung eines Zeitsignals**

Method for producing a time signal

Procédé pour produire un signal de temps

(84) Benannte Vertragsstaaten:
**AT BE CH CY DE DK ES FI FR GB GR IE IT LI LU MC NL PT SE**

(30) Priorität: **08.07.1999 DE 19931685**

(43) Veröffentlichungstag der Anmeldung:
**07.03.2001 Patentblatt 2001/10**

(73) Patentinhaber: **timeproof Time Signature Systems GmbH**
**21079 Hamburg (DE)**

(72) Erfinder: **Becker, Bernd**
**D-21256 Handeloh (DE)**

(74) Vertreter: **Schupfner, Gerhard D. et al**
**Müller Schupfner**
**Patentanwälte**
**Postfach 1753**
**21236 Buchholz (DE)**

(56) Entgegenhaltungen:
**GB-A- 2 271 251     US-A- 5 530 846**
**US-A- 5 661 700**

## Beschreibung

Durch die Zunahme an elektronischer Kommunikation wird der Schutz der zu übertragenden Daten immer wichtiger. In der elektronischen Datenkommunikation ist es von Bedeutung, die Vorlage von elektronischen Daten zu einem bestimmten Zeitpunkt nachweisen zu können.

Die nachfolgend beschriebene Erfindung ermöglicht die Erzeugung einer manipulationssicheren, monoton verlaufenden genauen Zeit. Die wesentlichen Merkmale der Erfindung sind:

1. Die Synchronisation einer Echtzeituhr erfolgt in Frequenz und Phase mit einer Referenzzeit, z.B. basierend auf DCF77 oder GPS.

2. Die Synchronisation der Echtzeituhr mit der Referenzzeit erfolgt monoton steigend (es gibt keine "rückwärts laufende Zeit").

3. Bei Ausfall des Referenzzeitsignals läuft die Uhr mit großer Ganggenauigkeit weiter.

### Detaillierte Beschreibung

### Anwendungsbereiche der Erfindung

Für die Beweiskraft elektronischer Dokumente müssen der Autor, die Zeit und der Ort der Unterzeichnung manipulationssicher festgehalten und nachgeprüft werden können. Zu diesem Zweck empfiehlt der Gesetzgeber "Digitale Signaturen", welche die Unversehrtheit und die Authentizität der Daten sicherstellen. Um die Vorgaben des Signaturgesetzes umsetzen zu können, muß eine manipulationsgesicherte Zeit zur Signatur verwendet werden. Neben der Signatur ist eine genaue, manipulationssichere Zeit aber auch für andere technische Komponenten, z.B. Rechnersysteme, von Bedeutung.

Zu Grunde gelegt werden amtliche Zeitsignale, wie sie auf nationaler oder aber auch auf internationaler Ebene zur Verfügung gestellt werden.

Nachfolgend sind drei Beispiele genannt, die aber nicht das Ende der Möglichkeiten darstellen.

Das **nationale deutsche** amtliche Zeitsignal DCF77 wird von der Deutschen Telekom in Mainflingen ausgestrahlt. Als Zeitreferenz dient die Atomuhr der PTB (Physikalisch Technische Bundesanstalt) in Braunschweig.

Dieses abgestrahlte Zeitsignal, bei einer Frequenz von 77,5 kHz (amplitudenmoduliert), besitzt allerdings eine eingeschränkte Reichweite von bis ca. 2000 km.

Ähnlich dem deutschen DCF77 Zeitsignal erzeugen z.B. auch Großbritannien und Frankreich ihr eigenes amtliches Zeitsignal.

Auf **internationaler globaler** Ebene besteht die Möglichkeit des Empfangs einer Referenzzeit mit Hilfe eines GPS-Empfangsmoduls.

Auf Grund des amerikanischen Satellitennavigationssystems ist ein stetiger Empfang nicht nur der Zeit sondern auch des Ortes bei einer Frequenz von ca. 1,57 GHz global möglich.

Ähnlich der amerikanischen GPS-Satellitentechnik arbeitet ebenfalls das russische Satellitennavigationssystem GLONASS.

Die dritte Möglichkeit eines Zeitsignalempfangs stellt die Verwendung der GSM-Zeit dar, die in den Frequenzbändern von ca. 900 MHz und 1,8 GHz wiederzufinden ist.

Die US 5,661,700 beschreibt ein Verfahren zur Synchronisierung unterschiedlicher lokale Zeitgeber eines Kontrollers mit einem zentralen Zeitgeber. Die lokalen Zeitgeber werden hierbei von einem zentralen Zeitgeber synchronisiert, indem die lokalen zeitgeber ihre Zeitfrequenz anhand des zentralen zeitgebers aufgrund der Differenz zwischen lokaler Zeit und zentralem Zeitwert korrigieren. Die lokalen Zeitgeber haben die Aufgabe mit Zeitinformationen versehene Steuerbefehle auszuwerten, vorzugsweise simultan. Das Systemzeitsignal wird vorzugsweise vom zentralen Zeitgeber in Form von zwei Zeitsignalen unterschiedlicher Taktrate an die lokalen Zeitgeber weitergeleitet, wobei das eine als zeitgeber /vergleicher und das andere als Korrekturgröße dient. Die Zeitkorrektur erfolgt graduell durch Anpassung des Zeittakts des lokalen zeitgebers.

Es folgt die technische Beschreibung eines Verfahren zur Erzeugung einer manipulationssicheren Zeit, welches beliebige Zeitsignale zur Synchronisation verwenden kann. Das Erzeugungsverfahren beschränkt sich dementsprechend nicht ausschließlich auf diese drei oben genannten amtlichen Zeitreferenzsignale. Welche Zeitsignale letztendlich für die Umsetzung verwendet werden, ist von der Einsatzumgebung abhängig.

Durch die vorliegende Regelung wird nicht nur eine kontinuierliche Anpassung der Echtzeituhr auf das amtliche Zeitsignal vorgenommen, sondern auch bei Wegfall des Zeitsignals über einen längeren Zeitraum eine monotone Zeit mit großer Genauigkeit sichergestellt.

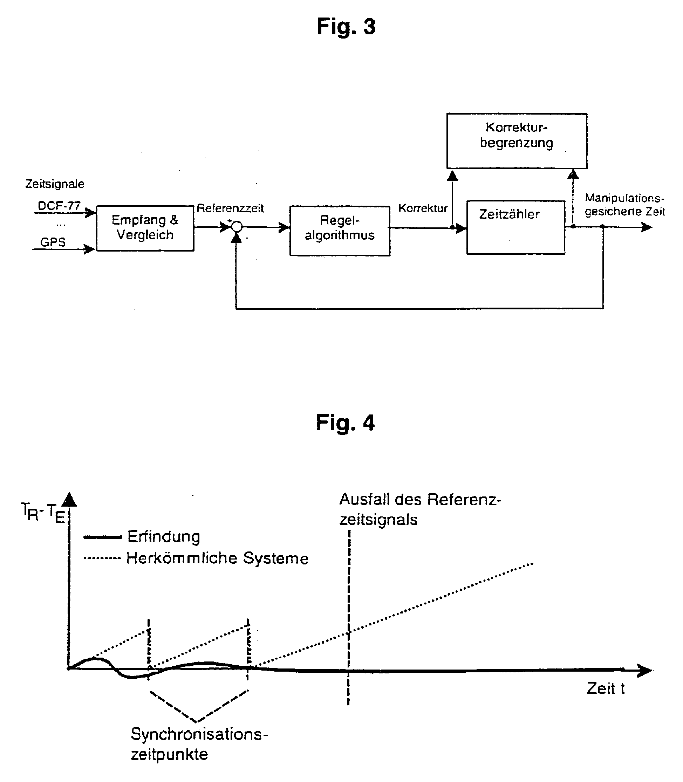

Das Blockschaltbild gemäß Figur 3 zeigt die einzelnen Arbeitsstufen des Systems.

**Empfang & Vergleich**

Das System kann mit mehreren Referenzzeitsignalen gespeist werden. Eines wird als Referenzzeit ausgewählt.

**Vergleich der empfangenen Zeit mit der Zeit der Echtzeituhr**

Die Referenzzeit wird mit der Zeit der Echtzeituhr verglichen. Die Differenz dieser Zeiten ist die Eingangsgröße für den Regelalgorithmus.

**Regelalgorithmus, Korrektur der Echtzeituhr**

Der Regelalgorithmus korrigiert die Echtzeituhr, z.B. durch eine Freigabe des Enable-Eingang des Zeitzählers. Der Algorithmus kann so ausgeführt werden, daß die geregelte Echtzeituhr hohe Genauigkeiten erzielt. Der Algorithmus stellt weiterhin sicher, daß die Zeit der Echtzeituhr keine Diskontinuitäten aufweist. Bei einem Ausfall der empfangenen Zeiten wird der Korrekturfaktor nicht neu bestimmt. Die Echtzeituhr kann somit mit dem alten Korrekturfaktor sehr genau weiterlaufen. Der Algorithmus erhält des weiteren Stellbegrenzungen für den Korrekturfaktor. Diese dienen dem Erkennen von Manipulationsversuchen. Der Regelalgorithmus kann z.B. Elemente eines PID-Reglers enthalten. Sinnvoll ist ein PI-Verhalten des Reglers, um Endschwingungen des Regelkreises zu vermeiden. Im Folgenden wird jedoch, der Einfachheit halber, von einem I-Regler ausgegangen.

**Absolute Korrekturbegrenzung**

Damit die Zeit nicht durch manipulierte Empfangssignale verfälscht wird, muß die Korrektur der Echtzeituhr überwacht und begrenzt werden. Diese Begrenzung gibt somit gleichzeitig die Genauigkeit der geregelten Echtzeituhr an. Die Korrekturfaktoren können aufgezeichnet werden (z.B. in einem EPROM), um im Nachhinein aus diesen Daten und der Genauigkeit der Echtzeituhr die maximal mögliche Abweichung der Zeit bestimmen zu können.

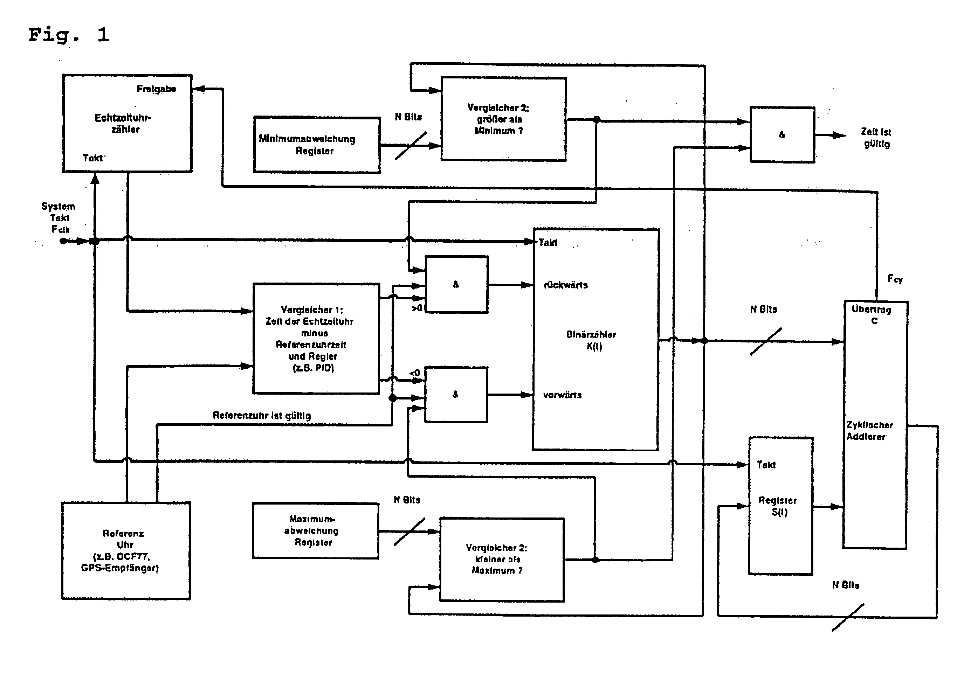

**<u>Funktionsbeschreibung der verwendete Komponenten (Fig. 1):</u>**

**Allgemein**

Das Nachstellen der Echtzeituhr läßt sich wie folgt beschreiben: Die aktuelle Zeit der Echtzeituhr wird mit der Referenzzeit verglichen (Vergleicher 1). Über diverse UND-Verknüpfungen wird ein Binärzähler inkrementiert oder dekrementiert, in Abhängigkeit davon, ob die Uhrzeit der Echtzeituhr größer oder kleiner als die Referenzzeit ist. Der Wert des Binärzählers $K(t)$ wird an den Addierer übergeben, wenn der Vergleich mit den Maximum- und Minimumgrenzwerten eine als gültig gewertete Zeit ergibt. Dieser addiert den Wert $K(t_n)$ zu dem vorherigen Wert $S(t_{n-1})$.
Der sich ergebende Übertrag C des Addierers steuert die Freigabe der Echtzeituhr.
Das System wird mit einem Takt gespeist, dessen Frequenz mit $F_{clk}$ bezeichnet wird. Als Periodendauer des Systemtaktes wird die Zeit zwischen $t_{n-1}$ und $t_n$ definiert.

**Zyklischer Addierer:**

Die Addition eines Wertes $K(t_n)$ des Binärzählers mit N Bit Wortbreite und eines Wertes $S(t_{n-1})$ mit N Bit Wortbreite aus dem Ergebnisregister erfolgt im Addierer. Das Ergebnis der Addition wird im Ergebnisregister als Wert $S(t_n)$ gespeichert.
Die Frequenz des Übertrags $F_{cy}$ ergibt sich aus folgender Formel:

$$F_{cy} = \frac{K \bullet F_{clk}}{2^N} \qquad\qquad 0 \leq K \leq 2^N - 1$$

Der zyklische Addierer zeichnet sich dadurch aus, daß bei entsprechender Implementierung die Übertragsfrequenz in sehr feiner Abstufung einstellbar ist. Die zeitliche Auflösung wird durch die Systemtaktfrequenz begrenzt, die langfristig erzielbare Ganggenauigkeit der Uhr ist Seitens des zyklischen Addierers nur durch die Wortbreite N begrenzt. Dieses Verfahren stellt im Gegensatz zu herkömmlichen, beispielsweise analogen Umsetzungen von Stellgröße zu Frequenz mittels verstimmbaren Oszillatoren, eine wesentliche technische Verbesserung dar.

**Ergebnisregister:**

Das letzte vom zyklischen Addierer erzeugte Ergebnis $S(t_n)$ wird im Ergebnisregister gespeichert. Es dient als eine Eingangsgröße des zyklischen Addierers zum Zeitpunkt $t_{n+1}$.

**UND Glieder:**

Die zwei UND Glieder bilden die Freigabewerte für den Vorwärts- bzw. Rückwärtszähler des Binärzählers. Sie bilden eine Undverknüpfung der Signale zwischen dem jeweiligen Ausgang des Vergleichers 1 (Zeitvergleich), des Vergleichers 2 (Minimum-Maximumabweichung) und des Gültigkeitssignals des Referenzzeitempfängers (Freigabesignal) vor. In Abhängigkeit von den Ausgangssignalen der beiden UND Glieder wird der Wert des Binärzählers K(t) inkrementiert, dekrementiert oder er bleibt konstant. Ein weiteres UND Glied bildet das Gültigkeitssignal der Zeit aus der Kombinatorik der Ausgänge der Maximum- und Minimumvergleicher.

**Quarzoszillator:**

Durch einen Quarzschwinger wird die Taktfrequenz ($F_{clk}$) des Gesamtsystems erzeugt (Systemtakt). Um Abweichungen so gering wie möglich zu halten, sollte ein Quarzoszillator gewählt werden, dessen Frequenz temperaturkompensiert ist, damit die Kurzzeitfrequenzdrift möglichst klein gehalten wird.

**Maximum- und Minimumregister:**

In den Speicherregistern Maximum und Minimum werden zuvor festgelegte Werte abgespeichert, welche mit den eingehenden Werten K(t) aus dem Binärzähler verglichen werden. Diese Register bilden die minimale und maximale Stellbegrenzung des Systems. Befindet sich K(t) außerhalb dieser Begrenzungswerte, kann auf eine Manipulation des Zeitreferenzsignals geschlossen werden.

**Vergleicher 1:**

Mit dem Vergleicher 1 werden die Zeit der Echtzeituhr und das Referenzzeitsignal miteinander verglichen. Die Ausgänge werden je nach Ergebnis belegt. Der Vergleicher 1 erzeugt den Eingangswert für den Regelalgorithmus.

**Vergleicher 2:**

Die beiden Vergleicher 2 nehmen eine Gegenüberstellung des Ausgangswertes K(t) des Binärzählers mit N Bit Länge und den jeweiligen Werten aus den Maximum- und Minimumregistern vor. Der Ausgang des jeweiligen Vergleichers 2 in Verbindung mit dem entsprechenden gesetzten Ausgang des Vergleichers 1 ist über eine UND Verknüpfung verantwortlich für ein Vorwärts- oder Rückwärtszählen des Wertes K(t) des Binärzählers.

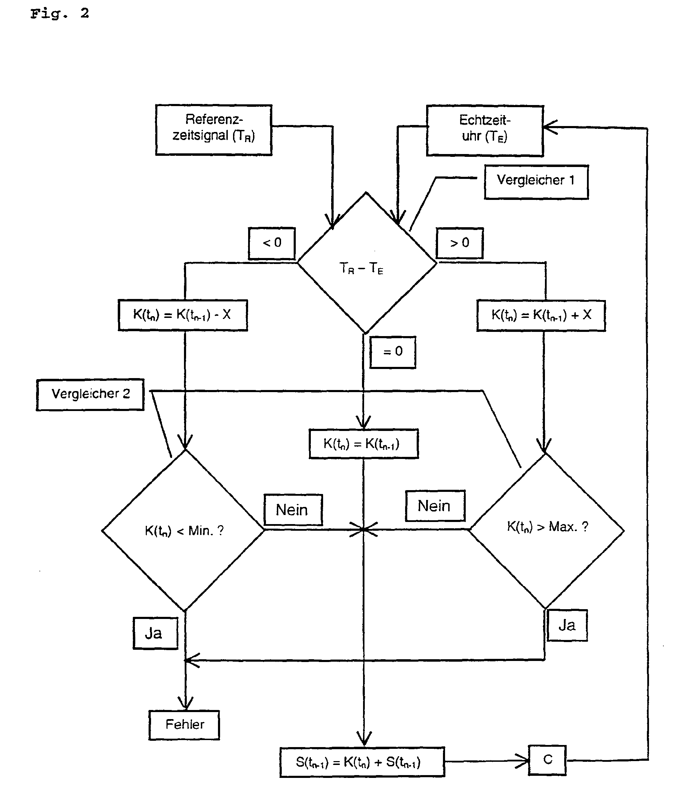

**<u>Beschreibung eines Zyklus aus Fig. 2</u>**

**Voraussetzungen:**

Die Zeit der Echtzeituhr ($T_E$) und die Referenzzeit ($T_R$) liegen als binäre Zahlen im Vergleicher 1 vor.

**Annahme 1: $T_R > T_E$**

Es entsteht ein Wert größer 0.
Dadurch wird das UND-Glied für das Vorwärtszählen des Binärzählers aktiviert. Der Wert K(t) des Binärzählers wird inkrementiert und wird an die Minimum- und Maximumvergleicher 2 übermittelt. In diesem Fall wird der Maximumvergleicher angesprochen, der einen Vergleich mit dem Maximumregister vornimmt. Ist K(t) größer als der Inhalt des Maximumregisters wird die Statusmeldung "Fehler" ausgegeben und das System gestoppt. In diesem Fall ist der Wert K(t) außerhalb des Maximum-toleranzbereiches. Durch die Vergrößerung des Binärzählerwertes K(t) erhöht sich die Übertragsfrequenz des rückgekoppelten Addierers und damit auch die Geschwindigkeit der Echtzeituhr. $T_E$ gleicht sich somit $T_R$ an.

**Annahme 2: $T_R < T_E$**

Es entsteht ein Wert kleiner 0.
Dadurch wird das UND-Glied für das Rückwärtszählen des Binärzählers aktiviert. Der Wert K(t) des Binärzählers wird dekrementiert und wird an die Minimum- und Maximumvergleicher 2 übermittelt. In diesem Fall wird der Minimumvergleicher angesprochen, der einen Vergleich mit dem Minimumregister vornimmt. Ist K(t) kleiner als der Inhalt des Minimumregisters wird die Statusmeldung "Fehler" ausgegeben und das System gestoppt. In diesem Fall ist der Wert K(t) außerhalb des Minimum-toleranzbereiches. Durch die Verkleinerung des Binärzählerwertes K(t) erniedrigt sich die Übertragsfrequenz des rückgekoppelten Addierers und damit auch die Geschwindigkeit der Echtzeituhr. $T_E$ gleicht sich somit $T_R$ an.

**Annahme 3: $T_R = T_E$**

In diesem Fall wird der Binärzähler weder inkrementiert noch dekrementiert ($K(t_n) = K(t_{n-1})$). Dies bedeutet, daß ein Abgleichen der Echtzeituhr nicht nötig ist, sie "geht genau".

**Annahme 4: Referenzzeitsignal zeitweise nicht verfügbar**

Auch in diesem Fall wird der Binärzähler weder inkrementiert noch dekrementiert ($K(t_n) = K(t_{n-1})$). Dies bedeutet, daß die Echtzeituhr mit der letzten Übertragsfrequenz weiterläuft, die sich durch die vorherige Einregelung auf das Referenzzeitsignal eingestellt hat.

**Annahme 5: Einspeisen eines Referenzzeitsignals mit ge**ändertem Zeittakt

**(Manipulationsversuch)**

Die Toleranzgrenzen des Systems werden, durch die Maximum- und Minimumregister vorgegeben. Dementsprechend läuft der Wert K(t), rückwärts oder vorwärts, je nach Manipulationsart, gegen die Maximum- oder Minimumgrenze. Dadurch erfolgt ein Abschalten des Reglers in Zusammenhang mit einer Fehlermeldungund ein langsames Wegziehen der Zeit wird verhindert.
In Figur 4 ist eine Betrachtung der Qualität des erzeugten Zeitsignals im Vergleich zu einem herkömmlichen Zeitsignal dargestellt.
$T_R$-$T_E$ ist die Differenz zwischen Referenzzeitsignal $T_R$ und Zeitsignal der Echtzeituhr $T_E$
Herkömmliche Verfahren synchronisieren die Echtzeituhr zu bestimmten Zeitpunkten auf das Referenzzeitsignal. Gemäß der Erfindung wird die Taktfrequenz der Echtzeituhr verändert, so daß eine Korrektur nicht mehr erforderlich ist.
Herkömmliche Systeme werden bei einem bestimmten Systemzustand bzw. unter bestimmten äußeren Bedingungen (z.B. Temperatur) vom Hersteller her abgeglichen, so daß die Taktfrequenz der Echtzeituhr mit der Taktfrequenz der Referenzzeit übereinstimmt. Wird das System später unter anderen Bedingungen betrieben, ist eine regelmäßige Synchronisation auf das Referenzzeitsignal erforderlich Das Verfahren gemäß der Erfindung regelt sich verändernde Bedingungen aus, so daß insbesondere auch bei Ausfall des Referenzsignals die Genauigkeit der Echtzeituhr wesentlich erhöht werden kann.

Fig. 1    Schematischer Aufbau zur Durchführung des Verfahrens gemäß der Erfindung

Fig. 2    Flußdiagramm zum Verfahren gemäß der Erfindung worin:
   $K(t_n)$ : Aktueller Binärzählerstand
   $K(t_{n-1})$ : Binärzählerstand vor dem letzten Sytemtakt
   $S(t_n)$ : Aktueller Summenwert
   $S(t_{n-1})$ : Summenwert vor dem letzten Sytemtakt
   X : natürlichzahliges Inkrement (gebildet aus Regler)
   C : Durch Addition von $K(t_n)+S(t_{n-1})$ gebildeterer Übertrag zur Taktfreigabe des Echtzeituhrzählers

Fig. 3    Blockschaltbild der einzelen Arbeitsstufen des Systems

Fig. 4    Betrachtung der Qualität des erzeugten Zeitsignals im Vergleich zu einem herkömmlichen Zeitsignal

**Patentansprüche**

1. Verfahren zur Erzeugung eines Zeitsignals, bei welchem ein eingehendes Referenzsignal mit dem Signal der Echtzeituhr in einem Vergleicher verglichen wird, **dadurch gekennzeichnet, daß** das Ausgangssignal des Vergleichers über UND-Verknüpfungen mit dem Referenzsignal zu einem Binärzähler geführt wird und diesen je nach Ergebnis des Vergleiches inkrementiert, dekrementiert, der Ausgang (k(t)) des Binärzählers dem einen Eingang eines zyklischen Addierers zugeführt wird, dessen Übertrag (c) zur Taktfreigabe des Echtzeituhrzählers eingesetzt wird, während der andere Eingang von einem Register das vom zyklischen Addierer zuvor erzeugte Signal (S(t)) erhält.

2. Verfahren nach Anspruch 1, **dadurch gekennzeichnet, daß** weitere Vergleicher eingesetzt werden, um die Vergleichsergebnisse des ersten Vergleichers mit zuvor festgelegten Werten zu vergleichen und beim Überschreiten ein Fehlersignal zu erzeugen.

**Claims**

1. A method for producing a time signal, wherein an incoming reference signal is compared with the signal from the real time clock in a comparator, **characterised in that** the output signal from the comparator is transmitted via AND gates with the reference signal to a binary counter and incremented or decremented to/from it according to the result of the comparison and **in that** the output (k(t)) of the binary counter is transmitted to one of the inputs of a cyclic adder whose transfer (c) is used for the timed release of the real time clock counter whilst the other input receives the signal (S(t)) previously produced by the cyclic adder from a register.

2. The method according to Claim 1, **characterised in that** further comparators are used to compare the comparison results of the first comparator with pre-established values and, if they are exceeded, to produce an error signal.

**Revendications**

1. Procédé pour produire un signal de temps dans lequel un signal de référence entrant est comparé au signal de l'horloge en temps réel dans un comparateur, **caractérisé en ce que** le signal de sortie du comparateur est acheminé, via des connexions ET, avec le signal de référence, vers un compteur binaire et celui-ci est incrémenté, décrémenté selon le résultat de la comparaison, la sortie (k(t)) du compteur binaire est acheminée vers l'une des entrées de l'additionneur cyclique dont le report (c) est utilisé pour la validation du temporisateur du compteur de l'horloge en temps réel, alors que l'autre entrée reçoit d'un registre le signal (S(t)) produit au préalable par l'additionneur cyclique.

2. Procédé selon la revendication 1, **caractérisé en ce que** d'autres comparateurs sont utilisés pour comparer les résultats de la comparaison du premier comparateur aux valeurs préalablement définies et produire un signal d'erreur en cas de dépassement.

Fig. 1

**Fig. 2**

## Fig. 3

Zeitsignale

DCF-77 → ... → GPS → | Empfang & Vergleich | → Referenzzeit → ⊕ → | Regel-algorithmus | → Korrektur → | Zeitzähler | → Manipulations-gesicherte Zeit

| Korrektur-begrenzung |

## Fig. 4

$T_R - T_E$

Ausfall des Referenz-zeitsignals

— Erfindung
········ Herkömmliche Systeme

Zeit t

Synchronisations-zeitpunkte

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

*   US 5661700 A